(19) Europäisches Patentamt
European Patent Office
Office européen des brevets

(11) **EP 4 617 951 A1**

(12) **EUROPEAN PATENT APPLICATION**

(43) Date of publication:
**17.09.2025 Bulletin 2025/38**

(21) Application number: **25163534.8**

(22) Date of filing: **13.03.2025**

(51) International Patent Classification (IPC):
**G06N 3/045** $^{(2023.01)}$     **G06N 20/20** $^{(2019.01)}$

(52) Cooperative Patent Classification (CPC):
**G06N 3/045; G06N 20/00; G06N 20/20**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.03.2024 US 202418605017**

(71) Applicant: **Cylance Inc.**
**Plano, TX 75024 (US)**

(72) Inventors:
• **COLLADO UMANA, Julian**
**Waterloo, Ontario N2K 0A7 (CA)**
• **FIENBERG, Aaron Mark Tresch**
**Waterloo, Ontario N2K 0A7 (CA)**

(74) Representative: **MERH-IP Matias Erny Reichl Hoffmann**
**Patentanwälte PartG mbB**
**Paul-Heyse-Straße 29**
**80336 München (DE)**

(54) **MACHINE LEARNING MODELS THAT GENERATE DIVERSE EMBEDDED VECTORS, ACCORDING TO AN IMPLEMENTATION**

(57)    Systems, methods, and software can be used to train and use machine learning models that generate diverse embedded vectors, according to an implementation. In some aspects, a method includes: processing a set of training samples through a plurality of first machine learning models to generate embedded vectors, wherein each of the plurality of first machine learning models generates an embedded vector for each training sample in the set of training samples; training a second machine learning model by using the embedded vectors; and training the plurality of first machine learning models by using the second machine learning model

**FIG. 2**

**Description**

**TECHNICAL FIELD**

The present disclosure relates to training and using machine learning models that generate diverse embedded vectors, according to an implementation.

**BACKGROUND**

In some implementations, a machine learning operation can be used to generate prediction outcomes of data samples. For example, the machine learning operation can be used in malware detection to determine whether a software code may contain malware code and thus, incur security risk. The machine learning operation can also be used in imaging processing, to determine whether the image data contain certain objects or resemble certain figures. The machine learning operation can also be used in voice recognition, to determine text of the audio data. The machine learning operation can be used in other applications.

**DESCRIPTION OF DRAWINGS**

FIG. 1 is a schematic diagram showing an example system that trains or uses machine learning models that generate diverse embedded vectors, according to an implementation.
FIG. 2 is a flowchart showing an example operation for training machine learning models that generate diverse embedded vectors, according to an implementation.
FIG. 3 is a flowchart showing an example method for training machine learning models that generate diverse embedded vectors, according to an implementation.
FIG. 4 is a flowchart showing an example method for using machine learning models that generate diverse embedded vectors, according to an implementation.
FIG. 5 illustrates a high-level architecture block diagram of a computer according to an implementation.

Like reference numbers and designations in the various drawings indicate like elements.

**DETAILED DESCRIPTION**

In a machine learning operation, an ensemble of models can be used to improve performance. Each model can have a different architecture, configuration, be trained on a different training date set, or any combinations thereof. Therefore, each model provides a different embedding space. These different embedding spaces may be used to embed extra different features, patterns, or use decision making processes when processing the same input. Therefore, by aggregating the results from these different models, the overall prediction can be improved.

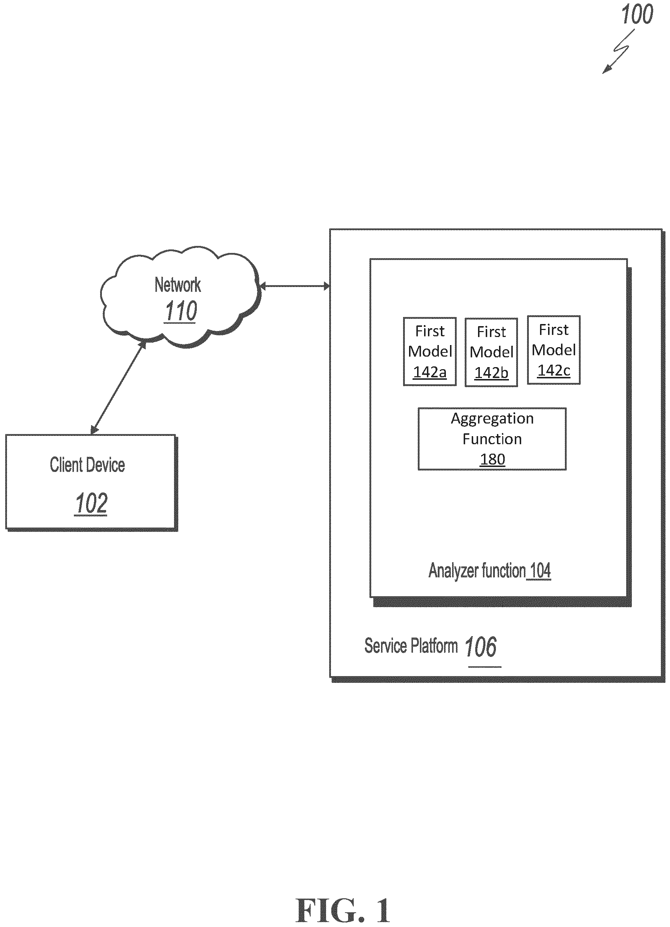

The difficulty in using the ensemble approach is to train a set of models that can generate diverse embeddings to represent the input sample, while also maintaining a high level of prediction accuracy. In some cases, a set of models can be trained by maximizing the diversity of the embedded representations generated by different embedded spaces while minimizing the predictive error of each model and the collective error of all models. For example, an iterative operation can be used to alternatively train a differentiation model and the embedded models. The differentiation model is trained to predict whether two embedded vectors generated from different embedded spaces belong to the same sample or not. The embedded models are trained to generate the embedding vectors from the input sample and can further generate prediction outputs based on the embedding vectors. By using different loss functions in different training steps of the differentiation model and the embedded models, an ensemble of models that provide diverse embedding spaces can be trained. FIGS. 1-5 and associated descriptions provide additional details of these implementations.

FIG. 1 is a schematic diagram showing an example system 100 that trains or uses machine learning models that generate diverse embedded vectors, according to an implementation. At a high level, the example system 100 includes a service platform 106 that is communicatively coupled with a client device 102 over a network 110.

The client device 102 represents an electronic device that provides an input sample to be analyzed. In some cases, the client device 102 can send the input sample to the service platform 106. In some cases, the service platform 106 can send the output to the client device 102.

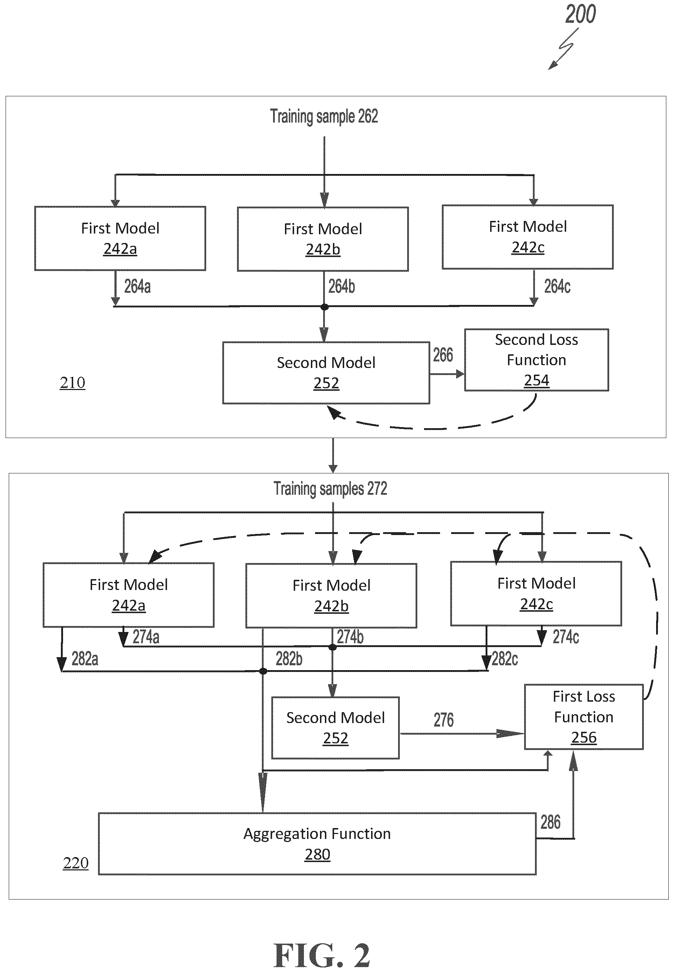

The service platform 106 represents an application, a set of applications, software, software modules, hardware, or any combination thereof, that analyzes the input sample by using machine learning models. The service platform 106 can be an application server, a service provider, or any other network entity. The service platform 106 can be implemented using one or more computers, computer servers, or a cloud-computing platform. The service platform 106 can be used to train machine learning models that are used in analysis, e.g., the training process discussed in FIG. 2 and associated descriptions.

The service platform 106 includes an analyzer function 104. The analyzer function 104 represents an application, a set of applications, software, software modules, hardware, or any combination thereof, that process the input sample. In some implementations, the analyzer function 104 can include a plurality of first models 142a, 142b, 142c. Each of the first models 142a, 142b, 142c represents a machine learning model. Each machine learning model can process the input sample to generate an embedding vector. As will be described in detail later, the first models 142a, 142b, 142c are trained to generate the embedding vectors that are diverse from each other based on the same input sample. In some cases, the analyzer function 104 can output embedding vectors for further analysis. For example, the analyzer function 104 can send the embedding vectors to the client device 102 or to another device for further processing by other machine learning models. Additionally or in combination, the analyzer function 104 can further process the embedded vectors to generate outputs. In some cases, each of the first models 142a, 142b, 142c can be a classification model. In these cases, each of the first models 142a, 142b, 142c generates a classification label of the input sample by processing the respective embedding vector. In some cases, each of the first models 142a, 142b, 142c can be a regression model. In these cases, each of the first models 142a, 142b, 142c generates a regression value of the input sample by processing the respective embedding vector. The analyzer function 104 can include an aggregation function 180. As will be described in detail later, the aggregation function 180 can aggregate the outputs by the first models 142a, 142b, 142c to generate an aggregated output. FIGS. 2-4 and associated descriptions provide additional details of these implementations.

The analysis performed by the analyzer function 104 can include image detection, text recognition, software malware detection, and etc. In some examples, the input samples can be text, image, audio, video, or software code. The output can be classifications or values representing types, features, or security risks of the input sample.

Turning to a general description, the client device 102 may include, without limitation, any of the following: endpoint, computing device, mobile device, mobile electronic device, user device, mobile station, subscriber station, portable electronic device, mobile communications device, wireless modem, wireless terminal, or another electronic device. Examples of an endpoint may include a mobile device, IoT (Internet of Things) device, EoT (Enterprise of Things) device, cellular phone, personal data assistant (PDA), smart phone, laptop, tablet, personal computer (PC), pager, portable computer, portable gaming device, wearable electronic device, health/medical/fitness device, camera, vehicle, or other mobile communications devices having components for communicating voice or data via a wireless communication network. A vehicle can include a motor vehicle (e.g., automobile, car, truck, bus, motorcycle, etc.), aircraft (e.g., airplane, unmanned aerial vehicle, unmanned aircraft system, drone, helicopter, etc.), spacecraft (e.g., spaceplane, space shuttle, space capsule, space station, satellite, etc.), watercraft (e.g., ship, boat, hovercraft, submarine, etc.), railed vehicle (e.g., train, tram, etc.), and other types of vehicles including any combinations of any of the foregoing, whether currently existing or after arising. The wireless communication network may include a wireless link over at least one of a licensed spectrum and an unlicensed spectrum. The term "mobile device" can also refer to any hardware or software component that can terminate a communication session for a user. In addition, the terms "user equipment," "UE," "user equipment device," "user agent," "UA," "user device," and "mobile device" can be used interchangeably herein.

The example system 100 includes the network 110. The network 110 represents an application, set of applications, software, software modules, hardware, or combination thereof, that can be configured to transmit data messages between the entities in the example system 100. The network 110 can include a wireless network, a wireline network, the Internet, or a combination thereof. For example, the network 110 can include one or a plurality of radio access networks (RANs), core networks (CNs), and the Internet. The RANs may comprise one or more radio access technologies. In some implementations, the radio access technologies may be Global System for Mobile communication (GSM), Interim Standard 95 (IS-95), Universal Mobile Telecommunications System (UMTS), CDMA2000 (Code Division Multiple Access), Evolved Universal Mobile Telecommunications System (E-UMTS), Long Term Evaluation (LTE), LTE-Advanced, the fifth generation (5G), or any other radio access technologies. In some instances, the core networks may be evolved packet cores (EPCs).

While elements of FIG. 1 are shown as including various component parts, portions, or modules that implement the various features and functionality, nevertheless, these elements may instead include a number of sub-modules, third-party services, components, libraries, and such, as appropriate. Furthermore, the features and functionality of various components can be combined into fewer components, as appropriate.

FIG. 2 is a flowchart showing an example operation 200 for training machine learning models that generate diverse embedded vectors, according to an implementation. The example operation 200 can be implemented by a service platform, e.g., the service platform 106 shown in FIG. 1. The example operation 200 shown in FIG. 2 can be implemented using additional, fewer, or different operations, which can be performed in the order shown or in a different order.

FIG. 2 illustrates a set of first models. While three first models 242a, 242b, and 242c are illustrated in FIG. 2, the number of first models in the set of first models can be any other integers greater than 1. Each of the first model is a machine learning model that processes an input to generate an embedded vector. FIG. 2 also illustrates a second model 252. The second model 252 is a differential model that generates a prediction result based on the differences between the embedded vectors.

In general, a machine learning model, including e.g., the first models 242a, 242b, and 242c, and the second model 252, can be configured as a neural network, e.g., a multilayer perceptron (MLP) or a convolutional neural network (CNN). In this case, the machine learning model may include at least one neural network layer, e.g., at least one fully connected layer or convolutional layer, or transformers. Alternatively or additionally, the machine learning model may be a graph neural network, a recurrent neural network, other machine learning models, or any combinations thereof. In the case of multiple neural network layers, they may be stacked, so as to pass data successively between them in a certain layer order. Each neuron in one layer is connected to some or all neurons in the next layer.

In some cases, the machine learning model can include the following layers: an input layer that takes as input the raw data and passes them to the rest of the network; one or more hidden layers that are intermediate layers between the input and output layer and process the data by applying complex non-linear functions to them, and an output layer that takes as input the processed data and produces the final results.

The hidden layers transform the input features into processed features. Each layer is implemented by using mathematical functions that apply weights to the input to produce an output specific to an intended result. In some cases, hidden layers can be implemented in a hierarchical way, where each layer in the hidden layers is specialized in producing one transformation for a target result and passes the output values to the next layer for further processing.

In some implementations, a first model, e.g., each of the first models 242a, 242b, and 242c, can be a classification model. A classification model takes an input and generates a classification label that reflects the class of the input. In one example, the input can be an image, and the classes can include different categories such as scenery, sports, portrait, and etc. The classification model can take the image as input and predict which class the image belongs to. In another example, the input can be a software code, and the classes can include different levels or types of security risks. The classification model can take the software code as input and predict which class reflects the security risk of the software code. The classification model can be used in many other implementations, e.g., classifying text, audio, or other inputs. In some cases, the classification model can include one or more embedding layers that process the input to generate an embedded vector that represents the input. The length of the embedded vector can be configured. The embedded vector can also be referred to as embeddings. The classification models can include one or more classification layers that process the embedded vector to generate the classification label that represents the input.

In some cases, a first model, e.g., each of the first models 242a, 242b, and 242c, can also be a regression model. Instead of generating a discrete value like a classification label, a regression model takes an input and generates a continuous value that reflects a feature of the input. In one example, the input can be an image, and the regression model can generate a continuous value representing the degree of lighting, the contrast, or other features. Other inputs such as software code, text, audio, and other data can also be processed by the regression model. In some cases, the regression model can also be used to predict values or trends. In some cases, the regression model can also include one or more embedding layers that process the input to generate an embedded vector that represents the input. The regression models can include one or more other layers that process the embedded vector to generate the regression values that represent the input.

The first models 242a, 242b, and 242c are configured to process the same type of input and generate the same type of output. For example, they may all be configured to process an input sample to generate a classification label of the input sample. The set of classes that the classification label is selected from are the same for all the first models. In another example, they may all be configured to process the same type of input data and generate a regression value within the same range. In some cases, the first models 242a, 242b, and 242c can be different types of machine learning models, e.g., MLP or CNN or a transformer-based architectures (such as a Vision Transformer). Hence, in one embodiment, when the input data is a binary file, the first model 242a is an MLP, the binary file is converted into a gray scale image before entering the first model 242b, which can be a CNN, and the first model 242c, which can be a vision transformer (ViT). Alternatively, the first models 242a, 242b, and 242c can be the same type of machine learning model but with different configurations, e.g., different number of layers or neurons. Alternatively or additionally, the first models 242a, 242b, and 242c can be trained on different sets of training samples, number of training rounds, etc. Therefore, they have different mathematical processes. Thus, the embedded vectors that they generate for the same input may be different, and the output (e.g., classification label or the regression value) that they generate for the same input may also be different.

At a high level, the training operation 200 includes the step 210, where the second model 252 is trained, and the step 220, where the first models 242a, 242b, and 242c are trained. In some cases, the second model 252 and the first models 242a, 242b, and 242c can be trained in alternative steps. For example, step 210 is performed for one iteration to train the second model 252, followed by step 220 for one iteration, where the first models 242a, 242b, and 242c are trained. Then step 210 is performed again to train the second model 252 for the second iteration, followed by another step 220 to train the first models 242a, 242b, and 242c for another iteration. The training continues until stopping criteria are met. The stopping criteria can be configured. In some cases, the stopping criteria can be a number of training iterations performed. Additionally or alternatively, a validation set can be used to test the model and determine validation loss. The training process can stop when the validation loss stops improving. In some cases, the same set of training samples can be used in different training iterations. Alternatively, different sets of training samples can be used.

At step 210, the second model 252 is trained, where the parameters of the first models 242a, 242b, and 242c are fixed. In some case, the first models 242a, 242b, and 242c may be pretrained.

As illustrated, during the step 210, a set of training samples 262 are used. Each training sample is processed by the first models 242a, 242b, and 242c to generate a respective embedded vector. Thus, the set of embedded vectors 264a, 264b, and 264c are generated respectively based on the set of training samples 262.

In this case, the embedded vectors 264a, 264b, and 264c can form a set of embedded vector pairs. In one example, the embedded vectors 264a, 264b, and 264c can be combined into a joint set of embedded vectors, and each embedded vector in the joint set is paired with each of the other embedded vectors to form a pair of embedded vectors. Thus, if the set of training samples 262 has N training samples, the number of embedded vectors in the joint set of embedded vectors is 3N, and the number of embedded vector pair is 3N(3N-1)/2. Other examples of selecting embedded vectors to form the set of embedded vector pairs can also be used.

For some pairs in the set of paired embedded vectors, the two embedded vectors in the pair may be embedded vectors that are generated from the same training sample but by different first models. For other pairs in the set of paired embedded vectors, the two embedded vectors in the pair may be embedded vectors that are generated from the different training sample.

The second model 252 is a differential model that takes two inputs and generates a prediction result indicating whether these two inputs are the same or from the same source. The differential model can also be referred to as a discriminator model or an adversarial model.

In this case, the second model 252 processes each pair of the embedded vectors to generate a differentiation prediction 266. The differentiation prediction 266 can also be referred to as a differentiation result, or a differentiation prediction result. The differentiation prediction 266 is a prediction result indicating whether these two embedded vectors are generated from the same input sample. The second model 252 can be initialized, e.g., untrained, before step 210.

In some cases, multiple second models 252 can be used. In this case, each second model 252 corresponds to a pair of first models. In this case, each second model is configured to process the embedded vectors that are outputted by the corresponding pair of first models. For example, one second model corresponds to the first models 242a and 242b and processes embedded vectors 264a and 264b; and another second model corresponds to the first models 242b and 242c and processes embedded vectors 264b and 264c; and yet another second model corresponds to the first models 242a and 242c and processes embedded vectors 264a and 264c. By using this approach, each second model can be specialized for discriminating between the embeddings generated by a given pair of first models.

In the step 210, the second model 252 (pre-trained or untrained) is further trained by using the second loss function 254. Following is an example of the second loss function 254:

$$L\_Diff = Loss(Diff\_ik(E\_i(x\_l), E\_k(x\_m)), y) \tag{1}$$

x_l and x_m represent the training samples, when l=m, the x_l and x_m represent the same training sample, i is an index of a first model, e.g., e.g., each of the first models 242a, 242b, 242c, E_i() and E_k() represent embedding vectors generating functions produced by the respective first model i and k. Thus E_i(x_l), represents the embedded vector generated by model i on the sample x_l, and E_k(x_m) represents the embedded vector generated by model k on the sample x_m. (E_i(x_l), E_k(x_m)) represents a paired embedded vector. Diff_ik represents a differentiation function, in this case representing the differentiation prediction 266. y is a Boolean value represent the actual indicator indicating whether the training samples are indeed the same. For example, y can be set to 1 if l=m, and set to 0 if l !=m. Thus for each pair of embedded vectors E_i(x_l), E_k(x_m), Diff_ik(E_i(x_l), E_k(x_m)) represent the prediction result generated by the second model 252 predicting whether the two embedded vectors are generated from the same training samples, and y represents the actual indicator of whether the two embedded vectors are generated from the same training samples. Loss () represents the loss function that compares the predicted probabilities to the actual indicator and generates a loss value that indicates how far the prediction is from the actual indicator. In some cases, binary cross entropy (BCE) can be used as the loss function to generate the loss value. Following is an example calculation formula of BCE:

$$Loss = -\frac{1}{N}\sum_{i=1}^{N} y_i \log(y_i') + (1 - y_i)\log(1 - (y_i')) \tag{2}$$

Where $y_i$ represents the actual value, $y_i'$ prediction, log () represents a logarithm function, N represents the number of prediction events

Thus, the loss function 254 can take the differentiation prediction 266 generated by the second model 252 for all the pair embedded vectors, and generate a loss value representing the effectiveness of the second model 252. Other loss functions, e.g., Categorical Cross Entropy, can also be used to generate the loss value.

The loss value is fed back to the second model 252 to train the parameters of the second model 252. In some cases, the loss value can be used to update the weights of the second model 252 by using the neural network training procedure of back propagation and gradient descent. In one example, the gradient of the loss value with respect to each of the weights of model 252 is calculated, and then the weights are updated based on the gradients and a learning rate. The goal of the step 210 is to train the second model 252 to accurately predict whether two embedded vectors are generated from the same training samples.

At 220, the first models 242a, 242b, and 242c are trained while the parameters of the second model 252 are fixed. As illustrated, during the step 220, a set of training samples 272 are used. In some cases, the set of training samples 272 can be the same set of training samples used in step 210, i.e., the set of training samples 262. Alternatively, different sets of training samples can be used.

Each training sample in the set of training samples 272 is processed by the first models 242a, 242b, and 242c to generate a respective embedded vector. Thus, the set of embedded vectors 274a, 274b, and 274c are generated respectively based on the set of training samples 262. Similarly to the step 210, the embedded vectors 264a, 264b, and 264c can form a set of embedded vector pairs. The second model 252 processes the embedded vector pairs to generate differentiation predictions 276.

For each training sample 272, each of the first models 242a, 242b, and 242c also generates a first output 282a, 282b, and 282c, respectively. The first output 282a, 282b, and 282c are functions of the embedded vectors 264a, 264b, and 264c discussed previously. As discussed previously, the first models 242a, 242b, and 242c can be classification models. In this case, the first output 282a, 282b, and 282c are the classification labels that each of the first models 242a, 242b, and 242c generates for the input training sample 272. Alternatively, the first models 242a, 242b, and 242c can be regression models. In this case, the first outputs 282a, 282b, and 282c are the regression values that each of the first models 242a, 242b, and 242c generates for the input training sample 272. Due to the differences in structure, configuration, or training process prior to the operation 200, although the same training sample is fed to the first models 242a, 242b, and 242c, the first output 282a, 282b, and 282c can be different.

For each training sample 272, the first outputs 282a, 282b, and 282c are aggregated by the aggregation function 280 to produce an aggregated output 286 for the training sample 272. In some cases, the aggregation function 280 can use analytics based aggregation mechanisms. In one example, the first models 242a, 242b, and 242c are classification models and the first outputs 282a, 282b, and 282c are classification labels. In this example, the aggregation function 280 can use a majority vote technique and count each of the first outputs 282a, 282b, and 282c as a vote to their respective classification labels, and pick the classification label that has the most votes as the aggregated output 286. A tie-break mechanism can also be configured in case multiple classification labels have the same number of votes. The tie-break can be a random selection among the multiple classification labels having the same number of votes. In another example, the first models 242a, 242b, and 242c are regression models and the first outputs 282a, 282b, and 282c are regression values. In this example, the aggregation function 280 can perform statistics calculations, e.g., means, medians, or any combination thereof, on the first outputs 282a, 282b, and 282c to generate the aggregated output 286. In some cases, different weights can be configured, each weight can increase or decrease the weight of a particular first output in generating the aggregated output 286.

The aggregation function 280 can also use machine learning based aggregation mechanisms. For example, a machine learning aggregation model (e.g., logistic regression, Convolutional Net, etc.) can receive the first outputs 282a, 282b, and 282c and generate an aggregated prediction 286.

In the step 220, a first loss function 256 is used to generate loss values that are used to train the first models 242a, 242b, and 242c. The loss value of generated by the first loss function 256 includes two components, a first loss parameter representing the accuracy of the first outputs 282a, 282b, and 282c, and a second loss parameter representing the differentiations of the embedded vectors generated from the same training samples. Following is an example of the first loss function 256:

$$\text{First Loss Value} = w3 \text{ x } L\_accuracy + w4 \text{ x } L\_differentiation \qquad (3)$$

where w3 and w4 are weight coefficients for the first loss parameter L_accuracy and the second loss parameter L_differentiation. They can be set to 1, representing equal weight for these two parameters. They can also be set to different positive values that increase or decrease the weight of the respective loss parameter.

L_differentiation represents the differentiations of the embedded vectors. Following is an example of the calculation for L_differentiation:

$$L\_differentiation = Loss(Diff\_ik(E\_i(x\_l), E\_k(x\_m)), 0) \qquad (4)$$

The calculation of L_differentiation is similar to the L_Diff discussed previously in equation (1), where x_l and x_m represent the training samples, when l=m, the x_l and x_m represent the same training sample, (E_i(x_l), E_k(x_m)) represents a paired embedded vector. Diff_ik represents a differentiation function, in this case representing the differentiation prediction results 276. However, in step 210, the goal is to train the second model 252 to correctly predict whether two embedded vectors are generated from the same training samples, so both the positive pair (where they are from the same sample) and the negative pair (where they are not from the same sample) are used, and thus the actual indicator y can be 1 or 0. In the step 220, the objective for L_differentiation is to evaluate whether the different embedded vectors have successfully fooled the second model, 252. Thus, the actual indicator is set to 0 and m is set to equal l.

L_accuracy represents the accuracy of first outputs 282a, 282b, and 282c. Following is an example of the calculation for L_accuracy:

$$L\_accuracy = w1 \times L\_1 + w2 \times L\_2 \tag{5}$$

L1 represents the loss parameters for individual models. L2 represents the loss parameters for the aggregation results. w1 and w2 are weight coefficients for L1 and L2, respectively. They can be set to 1, representing equal weight for these two parameters. They can also be set to different positive values that increase or decrease the weight of the respective parameter.

The objective of including L1 is to minimize the errors of each first models 242a, 242b, and 242c and increases the accuracy of first outputs 282a, 282b, and 282c. Following is an example of the calculation for L1:

$$L1 = sum\ (Loss(M\_i(E\_i(x), y)))\ for\ i=1\ \ldots\ T \tag{6}$$

where x represents a training sample, i represents the i-th first model, T represents the number of first models. In the illustrated example, T is 3 and E_i represents the first models 242a (when i=1), 242b (when i=2), and 242c (when i=3), respectively. E_i(x) represents the first embedded vector generated by the model i on the training sample x. M_i(E_i(x)) represents the first output generated by the model i on the training sample x. In one example, M_i(E_i(x)) can be the first output 282a that is a classification label generated by the first model 242a on a training sample 272. y is the actual indicator indicating the actual class of the training sample 272. Thus (M_i(E_i(x)), y) represents the predicted class and actual class of the training sample by the model i. In another example, M_i(E_i(x)) can be the first output 282a that is a regression value generated by the first model 242a on a training sample 272. y is the actual indicator indicating the actual value of the training sample 272. Thus (M_i(E_i(x)), y) represents the predicted value and actual value of the training sample by the model i.

Loss () represents the loss function that compares the prediction by the first model and the actual indicator and generates a loss value that indicates how far the prediction is from the actual indicator. In some cases, e.g., when the first models are classification models, the BCE that was discussed previously can be used for the loss function. Other classification loss functions, e.g., Categorical Cross Entropy (CCE), can also be used. Alternatively, e.g., when the first models are regression models, regression loss functions, e.g., mean squared error, means absolute error, or Huber loss can be used. The loss function is applied to the predictions generated by each first model and then summed for all the first models.

L2 represents the loss parameters for the aggregation results. The objective of including L2 is to minimize the errors of the aggregated output 286. Following is an example of the calculation for L2:

$$L2 = Loss\ (aggregate\ (M\_1(E\_1(x)), M\_2(E\_2(x)) \ldots M\_T(E\_T(x)), y) \tag{7}$$

where x represents training sample, T represents the number of first models. In the illustrated example, T is 3 and E_1, E_2, ... E_T represent the first models 242a, 242b, and 242c, respectively. E_1(x) represents the first embedded vector generated by the model 1, e.g., the first model 242a, on the training sample x. M_1(E_1(x)) represents the first output 282a generated by the first model 242a on the training sample x. M_2(E_2(x)) and M_3(E_3(x)) represents first outputs 282b and 282c respectively, generated by the first models 242b and 242c on the training sample x. Aggregate (M_1(E_1(x)), M_2(E_2(x))...M_T(E_T(x)) represents the aggregated output 286 generated by the aggregate function 280 based on the outputs 282a, 282b, and 282c.

Loss () represents the loss function that compares the aggregated output 286 and the actual indicator and generates a loss value that indicates how far the aggregated prediction is from the actual indicator. As discussed previously with respect to L1, classification loss functions, e.g., BCE or CCE, or regression loss functions, e.g., mean squared error, means absolute error, or Huber loss, can be used to implement the loss () in L2 calculation.

Thus the first loss value, e.g., calculated in equation (3), takes into account the prediction accuracy by the first models both individually and collectively, and the ability for the first models to generate diverse embedded vectors from the same samples.

The first loss value is fed back to the first models 242a, 242b, and 242c to train the parameters of the respective models. In some cases, the loss value can be used to update the weights of the first models 242a, 242b, and 242c by using the neural network training procedure of back propagation and gradient descent. In one example, the gradient of the loss value with respect to each of the weights of a first model is calculated, and then the weights are updated based on the gradients and a learning rate. The goal of the step 220 is to train the first models 242a, 242b, and 242c to generate diverse embedded vectors from the same training samples while maintaining or increasing the accuracy in their prediction outputs.

In some operations, the embedding layers in the first models 242a, 242b, and 242c can be trained while other layers, e.g., classification layers in classification models or other layers that calculating regression values in regression models) are fixed. The other layers can then be trained while the embedding layers are fixed. Alternatively, the embedding layers and other layers can be trained together.

In some cases, the aggregation function 280 can be a machine learning model. The aggregation function 280 can be trained while the first models 242a, 242b, and 242c are fixed. Alternatively, the aggregation function 280 and the first models 242a, 242b, and 242c can be trained together.

.

In some cases, the operation 200 can be performed in an iterative operation, where the operation 200 can return to step 210 after 220, and continues until configured stopping criteria are met.

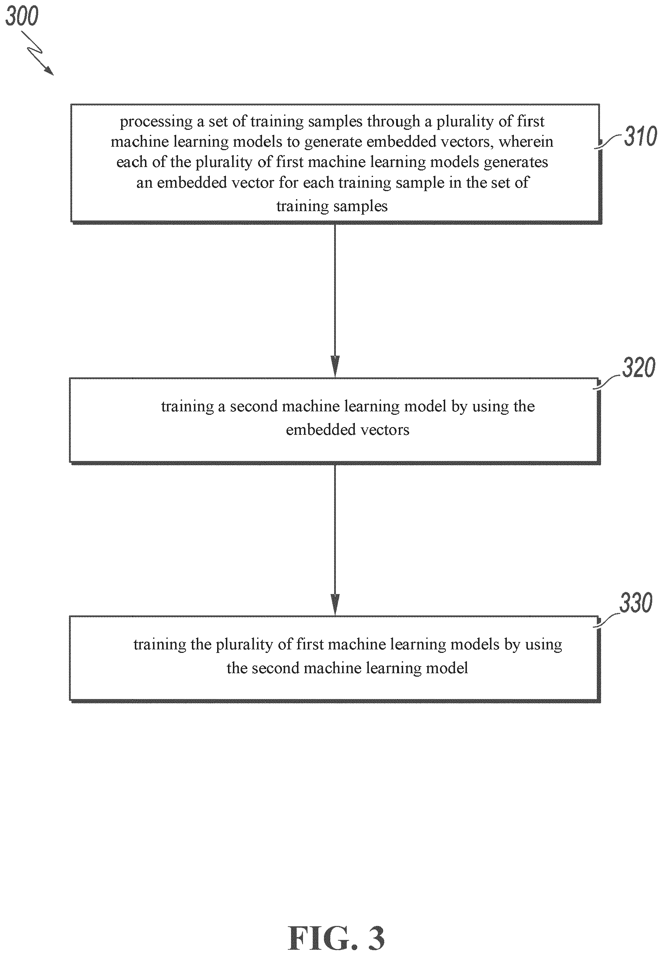

FIG. 3 is a flowchart showing an example method 300 for training machine learning models that generate diverse embedded vectors, according to an implementation. The example method 300 can be implemented by a server, e.g., the service platform 106 shown in FIG. 1. The example method 300 shown in FIG. 3 can be implemented using additional, fewer, or different operations, which can be performed in the order shown or in a different order.

At 310, a set of training samples is processed through a plurality of first machine learning models to generate embedded vectors. Each of the plurality of first machine learning models generates an embedded vector for each training sample in the set of training samples. At 320, a second machine learning model is trained by using the embedded vectors. At 330, the plurality of first machine learning models are trained by using the second machine learning model.

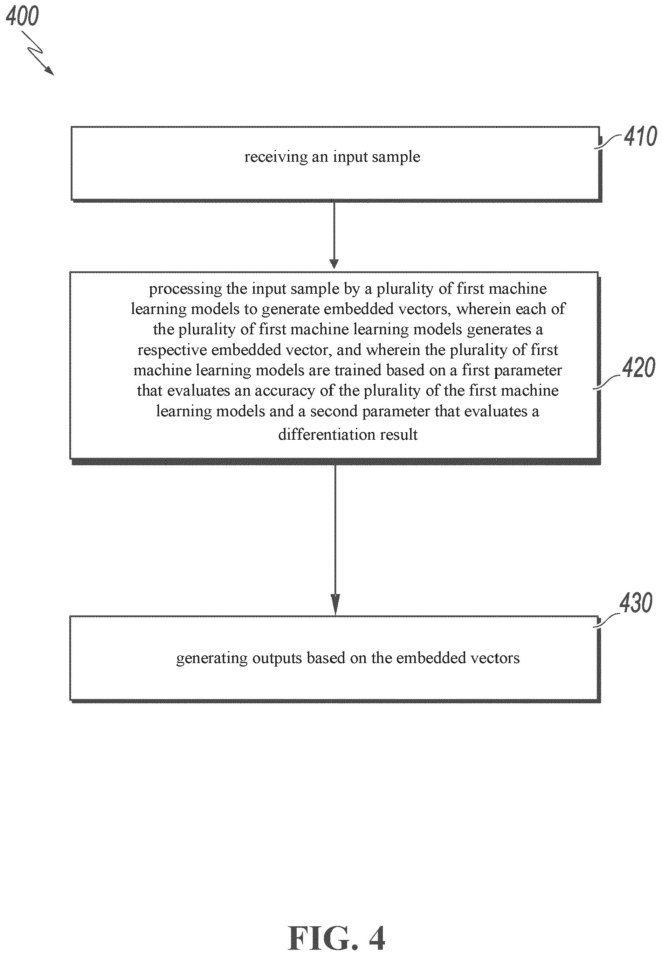

FIG. 4 is a flowchart showing an example method 400 for using machine learning models that generate diverse embedded vectors, according to an implementation. The example method 400 can be implemented by a server, e.g., the service platform 106 shown in FIG. 1. The example method 400 shown in FIG. 4 can be implemented using additional, fewer, or different operations, which can be performed in the order shown or in a different order.

At 410, an input sample is received. At 420, the input sample is processed by a plurality of first machine learning models to generate embedded vectors. Each of the plurality of first machine learning models generates a respective embedded vector. The plurality of first machine learning models are trained based on a first parameter that evaluates an accuracy of the plurality of the first machine learning models and a second parameter that evaluates a differentiation result. At 430, the embedded vectors are used to generate outputs. The outputs can be a classification label or regression value. In some cases, each of the plurality of first machine learning models generates a respective first output and an aggregation function is used to aggregate the first outputs to generate an aggregated output.

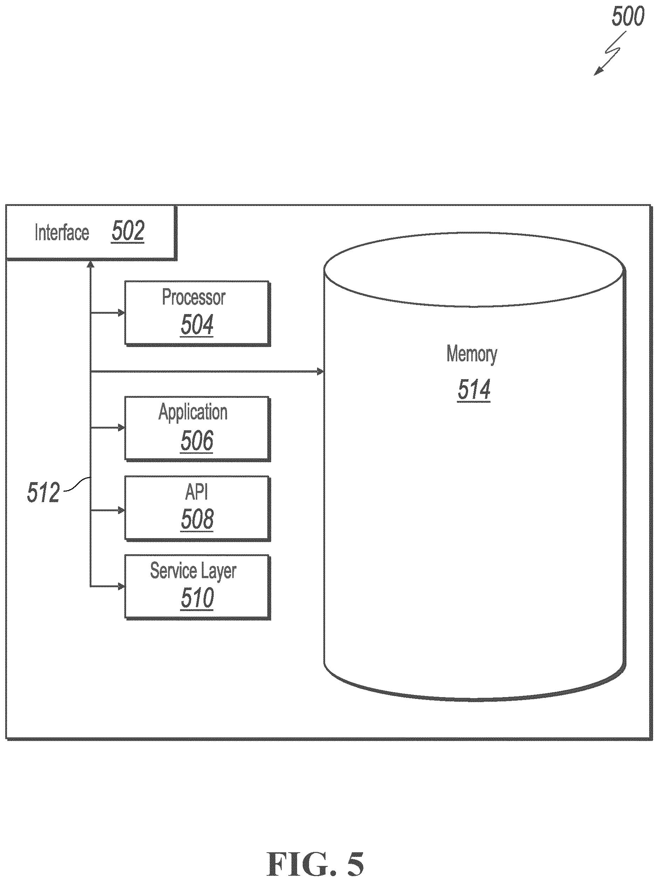

FIG. 5 illustrates a high-level architecture block diagram of a computer 500 according to an implementation. The computer 500 can be implemented as the client device 102, the software service platform, or any combinations thereof. The computer 500 can also be used to implement the operations discussed in FIGS. 1-4. The described illustration is only one possible implementation of the described subject matter and is not intended to limit the disclosure to the single described implementation. Those of ordinary skill in the art will appreciate the fact that the described components can be connected, combined, and/or used in alternative ways consistent with this disclosure.

In some cases, the processing algorithm of the code package establishment can be implemented in an executable computing code, e.g., C/C++ executable codes. In some cases, the computer 500 can include a standalone Linux system that runs batch applications. In some cases, the computer 500 can include mobile or personal computers.

The computer 500 may comprise a computer that includes an input device, such as a keypad, keyboard, touch screen, microphone, speech recognition device, other device that can accept user information, and/or an output device that conveys information associated with the operation of the computer, including digital data, visual and/or audio information, or a GUI.

The computer 500 can serve as a client, network component, a server, a database, or other persistency, and/or any other components. In some implementations, one or more components of the computer 500 may be configured to operate within a cloud-computing-based environment.

At a high level, the computer 500 is an electronic computing device operable to receive, transmit, process, store, or manage data. According to some implementations, the computer 500 can also include or be communicably coupled with an application server, e-mail server, web server, caching server, streaming data server, business intelligence (BI) server, and/or other server.

The computer 500 can collect data of network events or mobile application usage events over network 110 from a web browser or a client application, e.g., an installed plugin. In addition, data can be collected by the computer 500 from internal users (e.g., from a command console or by another appropriate access method), external or third parties, other automated applications, as well as any other appropriate entities, individuals, systems, or computers.

Each of the components of the computer 500 can communicate using a system bus 512. In some implementations, any and/or all the components of the computer 500, both hardware and/or software, may interface with each other and/or the interface 502 over the system bus 512 using an Application Programming Interface (API) 508 and/or a service layer 510. The API 508 may include specifications for routines, data structures, and object classes. The API 508 may be either computer language-independent or -dependent and refer to a complete interface, a single function, or even a set of APIs. The service layer 510 provides software services to the computer 500. The functionality of the computer 500 may be accessible for all service consumers using this service layer. Software services, such as those provided by the service layer 510, provide reusable, defined business functionalities through a defined interface. For example, the interface may be software written in JAVA, C++, or other suitable languages providing data in Extensible Markup Language (XML) format or other suitable format. While illustrated as an integrated component of the computer 500, alternative implementations may illustrate the API 508 and/or the service layer 510 as stand-alone components in relation to other components of the computer 500. Moreover, any or all parts of the API 508 and/or the service layer 510 may be implemented as child or sub-modules of another software module, enterprise application, or hardware module without departing from the scope of this disclosure.

The computer 500 includes an interface 502. Although illustrated as a single interface 502 in FIG. 5, two or more interfaces 502 may be used according to particular needs, desires, or particular implementations of the computer 500. The interface 502 is used by the computer 500 for communicating with other systems in a distributed environment connected to a network (whether illustrated or not). Generally, the interface 502 comprises logic encoded in software and/or hardware in a suitable combination and operable to communicate with the network. More specifically, the interface 502 may comprise software supporting one or more communication protocols associated with communications such that the network or interface's hardware is operable to communicate physical signals within and outside of the computer 500.

The computer 500 includes at least one processor 504. Although illustrated as a single processor 504 in FIG. 5, two or more processors may be used according to particular needs, desires, or particular implementations of the computer. Generally, the processor 504 executes instructions and manipulates data to perform the operations of the computer 500. Specifically, the processor 504 executes the functionality disclosed in FIGS. 1-4.

The computer 500 also includes a memory 514 that holds data for the computer 500. Although illustrated as a single memory 514 in FIG. 5, two or more memories may be used according to particular needs, desires, or particular implementations of the computer 500. While memory 514 is illustrated as an integral component of the computer 500, in alternative implementations, memory 514 can be external to the computer 500.

The application 506 is an algorithmic software engine providing functionality according to particular needs, desires, or particular implementations of the computer 500, particularly with respect to functionality required for anomaly detection. Although illustrated as a single application 506, the application 506 may be implemented as multiple applications 506 on the computer 500. In addition, although illustrated as integral to the computer 500, in alternative implementations, the application 506 can be external to the computer 500.

There may be any number of computers 500 associated with, or external to, and communicating over a network. Furthermore, this disclosure contemplates that many users may use one computer 500, or that one user may use multiple computers 500.

Described implementations of the subject matter can include one or more features, alone or in combination.

For example, in a first implementation, a method, comprising: processing a set of training samples through a plurality of first machine learning models to generate embedded vectors, wherein each of the plurality of first machine learning models generates an embedded vector for each training sample in the set of training samples; training a second machine learning model by using the embedded vectors; and training the plurality of first machine learning models by using the second machine learning model.

The foregoing and other described implementations can each, optionally, include one or more of the following features:

A first feature, combinable with any of the following features, further comprising: repeating the processing, the training of the second machine learning model, and the training of the plurality of first machine learning models in an iterative operation.

A second feature, combinable with any of the previous or following features, wherein the second machine learning model is trained by using a loss function that predicts whether different embedded vectors are generated from a same training sample.

A third feature, combinable with any of the previous or following features, wherein training the plurality of first machine learning models comprises training a plurality of first machine learning models with an aggregation function, wherein each of the plurality of first machine learning models generates a first output from an input sample and the aggregation function aggregates the first outputs from the plurality of first machine learning models to generate an aggregated output for the input sample.

A fourth feature, combinable with any of the previous or following features, wherein the plurality of first machine learning models are trained based on a first parameter that evaluates an accuracy of the plurality of the first machine learning models and a second parameter that evaluates a differentiation result.

A fifth feature, combinable with any of the previous or following features, wherein the first parameter is calculated based on a third parameter that evaluates a first accuracy of each of the plurality of first machine learning models and a second accuracy of an aggregated output of the plurality of first machine learning models.

A sixth feature, combinable with any of the previous or following features, wherein each training sample represents an image, a software code, or a text.

A seventh feature, combinable with any of the previous or following features, wherein each of the plurality of first machine learning models is configured to classify each training sample.

An eighth feature, combinable with any of the previous features, wherein each of the plurality of first machine learning models is configured to generate a regression value based on each training sample.

In a second implementation, a method, comprising: receiving an input sample; and processing the input sample by a plurality of first machine learning models to generate embedded vectors, wherein each of the plurality of first machine learning models generates a respective embedded vector, and wherein the plurality of first machine learning models are trained based on a first parameter that evaluates an accuracy of the plurality of the first machine learning models and a second parameter that evaluates a differentiation result.

The foregoing and other described implementations can each, optionally, include one or more of the following features:

A first feature, combinable with any of the following features, further comprising: generating a classification label for the input sample.

A second feature, combinable with any of the previous or following features, further comprising: generating a regression value for the input sample.

In a third implementation, a computer-implemented system, comprising: one or more computers; and one or more computer memory devices interoperably coupled with the one or more computers and having tangible, non-transitory, machine-readable media storing one or more instructions that, when executed by the one or more computers, perform one or more operations comprising: processing a set of training samples through a plurality of first machine learning models to generate embedded vectors, wherein each of the plurality of first machine learning models generates an embedded vector for each training sample in the set of training samples; training a second machine learning model by using the embedded vectors; and training the plurality of first machine learning models by using the second machine learning model.

The foregoing and other described implementations can each, optionally, include one or more of the following features:

A first feature, combinable with any of the following features, the operations further comprising: repeating the processing, the training of the second machine learning model, and the training of the plurality of first machine learning models in an iterative operation.

A second feature, combinable with any of the previous or following features, wherein the second machine learning model is trained by using a loss function that predicts whether different embedded vectors are generated from a same training sample.

A third feature, combinable with any of the previous or following features, wherein training the plurality of first machine learning models comprises training a plurality of first machine learning models with an aggregation function, wherein each of the plurality of first machine learning models generates a first output from an input sample and the aggregation function aggregates the first outputs from the plurality of first machine learning models to generate an aggregated output for the input sample.

A fourth feature, combinable with any of the previous or following features, wherein the plurality of first machine learning models are trained based on a first parameter that evaluates an accuracy of the plurality of the first machine learning models and a second parameter that evaluates a differentiation result.

A fifth feature, combinable with any of the previous or following features, wherein the first parameter is calculated based on a third parameter that evaluates a first accuracy of each of the plurality of first machine learning models and a second accuracy of an aggregated output of the plurality of first machine learning models.

A sixth feature, combinable with any of the previous or following features, wherein each training sample represents an image, a software code, or a text.

A seventh feature, combinable with any of the previous or following features, wherein each of the plurality of first machine learning models is configured to classify each training sample.

An eighth feature, combinable with any of the previous features, wherein each of the plurality of first machine learning models is configured to generate a regression value based on each training sample.

In a fourth implementation, a computer-implemented system, comprising: one or more computers; and one or more computer memory devices interoperably coupled with the one or more computers and having tangible, non-transitory, machine-readable media storing one or more instructions that, when executed by the one or more computers, perform one or more operations comprising: receiving an input sample; and processing the input sample by a plurality of first machine learning models to generate embedded vectors, wherein each of the plurality of first machine learning models generates a respective embedded vector, and wherein the plurality of first machine learning models are trained based on a first parameter that evaluates an accuracy of the plurality of the first machine learning models and a second parameter that evaluates a differentiation result.

The foregoing and other described implementations can each, optionally, include one or more of the following features:

A first feature, combinable with any of the following features, further comprising: generating a classification label for the input sample.

A second feature, combinable with any of the previous or following features, further comprising: generating a regression value for the input sample.

In a fifth implementation, one or more computer-readable media containing instructions which, when executed, cause an electronic device to perform operations comprising: processing a set of training samples through a plurality of first machine learning models to generate embedded vectors, wherein each of the plurality of first machine learning models generates an embedded vector for each training sample in the set of training samples; training a second machine learning model by using the embedded vectors; and training the plurality of first machine learning models by using the second machine learning model.

The foregoing and other described implementations can each, optionally, include one or more of the following features:

A first feature, combinable with any of the following features, the operations further comprising: repeating the processing, the training of the second machine learning model, and the training of the plurality of first machine learning models in an iterative operation.

A second feature, combinable with any of the previous or following features, wherein the second machine learning model is trained by using a loss function that predicts whether different embedded vectors are generated from a same training sample.

A third feature, combinable with any of the previous or following features, wherein training the plurality of first machine learning models comprises training a plurality of first machine learning models with an aggregation function, wherein each of the plurality of first machine learning models generates a first output from an input sample and the aggregation function aggregates the first outputs from the plurality of first machine learning models to generate an aggregated output for the input sample.

A fourth feature, combinable with any of the previous or following features, wherein the plurality of first machine learning models are trained based on a first parameter that evaluates an accuracy of the plurality of the first machine learning models and a second parameter that evaluates a differentiation result.

A fifth feature, combinable with any of the previous or following features, wherein the first parameter is calculated based on a third parameter that evaluates a first accuracy of each of the plurality of first machine learning models and a second accuracy of an aggregated output of the plurality of first machine learning models.

A sixth feature, combinable with any of the previous or following features, wherein each training sample represents an image, a software code, or a text.

A seventh feature, combinable with any of the previous or following features, wherein each of the plurality of first machine learning models is configured to classify each training sample.

An eighth feature, combinable with any of the previous features, wherein each of the plurality of first machine learning models is configured to generate a regression value based on each training sample.

In a sixth implementation, one or more computer-readable media containing instructions which, when executed, cause an electronic device to perform operations comprising: receiving an input sample; and processing the input sample by a plurality of first machine learning models to generate embedded vectors, wherein each of the plurality of first machine learning models generates a respective embedded vector, and wherein the plurality of first machine learning models are trained based on a first parameter that evaluates an accuracy of the plurality of the first machine learning models and a second parameter that evaluates a differentiation result.

The foregoing and other described implementations can each, optionally, include one or more of the following features:

A first feature, combinable with any of the following features, further comprising: generating a classification label for the input sample.

A second feature, combinable with any of the previous or following features, further comprising: generating a regression value for the input sample.

Implementations of the subject matter and the functional operations described in this specification can be implemented in digital electronic circuitry, in tangibly embodied computer software or firmware, in computer hardware, including the structures disclosed in this specification and their structural equivalents, or in combinations of one or more of them. Software implementations of the described subject matter can be implemented as one or more computer programs, that is, one or more modules of computer program instructions encoded on a tangible, non transitory, computer-readable medium for execution by, or to control the operation of, a computer or computer-implemented system. Alternatively, or additionally, the program instructions can be encoded in/on an artificially generated propagated signal, for example, a machine-generated electrical, optical, or electromagnetic signal that is generated to encode information for transmission to a receiver apparatus for execution by a computer or computer-implemented system. The computer-storage medium can be a machine-readable storage device, a machine-readable storage substrate, a random or serial access memory device, or a combination of computer-storage mediums. Configuring one or more computers means that the one or more computers have installed hardware, firmware, or software (or combinations of hardware, firmware, and software) so that when the software is executed by the one or more computers, particular computing operations are performed. The computer storage medium is not, however, a propagated signal.

The term "real-time," "real time," "realtime," "real (fast) time (RFT)," "near(ly) real-time (NRT)," "quasi real-time," or similar terms (as understood by one of ordinary skill in the art), means that an action and a response are temporally proximate such that an individual perceives the action and the response occurring substantially simultaneously. For example, the time difference for a response to display (or for an initiation of a display) of data following the individual's action to access the data can be less than 1 millisecond (ms), less than 1 second (s), or less than 5 s. While the requested data need not be displayed (or initiated for display) instantaneously, it is displayed (or initiated for display) without any intentional delay, taking into account processing limitations of a described computing system and time required to, for example, gather, accurately measure, analyze, process, store, or transmit the data.

The terms "data processing apparatus," "computer," "computing device," or "electronic computer device" (or an equivalent term as understood by one of ordinary skill in the art) refer to data processing hardware and encompass all kinds of apparatuses, devices, and machines for processing data, including by way of example, a programmable processor, a computer, or multiple processors or computers. The computer can also be, or further include special-purpose logic circuitry, for example, a central processing unit (CPU), a field-programmable gate array (FPGA), or an application specific integrated circuit (ASIC). In some implementations, the computer or computer-implemented system or special-purpose logic circuitry (or a combination of the computer or computer-implemented system and special-purpose logic circuitry) can be hardware- or software-based (or a combination of both hardware- and software-based). The computer can optionally include code that creates an execution environment for computer programs, for example, code that constitutes processor firmware, a protocol stack, a database management system, an operating system, or a combination of execution environments. The present disclosure contemplates the use of a computer or computer-implemented system with an operating system, for example LINUX, UNIX, WINDOWS, MAC OS, ANDROID, or IOS, or a combination of operating systems.

A computer program, which can also be referred to or described as a program, software, a software application, a unit, a module, a software module, a script, code, or other component can be written in any form of programming language, including compiled or interpreted languages, or declarative or procedural languages, and it can be deployed in any form, including, for example, as a stand alone program, module, component, or subroutine, for use in a computing environment. A computer program can, but need not, correspond to a file in a file system. A program can be stored in a portion of a file that holds other programs or data, for example, one or more scripts stored in a markup language document, in a single file dedicated to the program in question, or in multiple coordinated files, for example, files that store one or more modules, sub programs, or portions of code. A computer program can be deployed to be executed on one computer or on multiple computers that are located at one site or distributed across multiple sites and interconnected by a communication network.

While portions of the programs illustrated in the various figures can be illustrated as individual components, such as units or modules, that implement described features and functionality using various objects, methods, or other processes, the programs can instead include a number of sub-units, sub-modules, third-party services, components, libraries, and other components, as appropriate. Conversely, the features and functionality of various components can be combined into single components, as appropriate. Thresholds used to make computational determinations can be statically, dynamically, or both statically and dynamically determined.

Described methods, processes, or logic flows represent one or more examples of functionality consistent with the present disclosure and are not intended to limit the disclosure to the described or illustrated implementations, but to be accorded the widest scope consistent with described principles and features. The described methods, processes, or logic flows can be performed by one or more programmable computers executing one or more computer programs to perform functions by operating on input data and generating output data. The methods, processes, or logic flows can also be performed by, and computers can also be implemented as, special-purpose logic circuitry, for example, a CPU, an FPGA, or an ASIC.

Computers for the execution of a computer program can be based on general or special-purpose microprocessors, both, or another type of CPU. Generally, a CPU will receive instructions and data from and write to a memory. The essential elements of a computer are a CPU, for performing or executing instructions, and one or more memory devices for storing instructions and data. Generally, a computer will also include, or be operatively coupled to, receive data from or transfer data to, or both, one or more mass storage devices for storing data, for example, magnetic, magneto optical disks, or optical disks. However, a computer need not have such devices. Moreover, a computer can be embedded in another device, for example, a mobile telephone, a personal digital assistant (PDA), a mobile audio or video player, a game console, a global positioning system (GPS) receiver, or a portable memory storage device, for example, a universal serial bus (USB) flash drive, to name just a few.

Non-transitory computer readable media for storing computer program instructions and data can include all forms of permanent/non-permanent or volatile/non volatile memory, media and memory devices, including by way of example semiconductor memory devices, for example, random access memory (RAM), read only memory (ROM), phase change memory (PRAM), static random access memory (SRAM), dynamic random access memory (DRAM), erasable programmable read-only memory (EPROM), electrically erasable programmable read-only memory (EEPROM), and flash memory devices; magnetic devices, for example, tape, cartridges, cassettes, internal/removable disks; magneto optical disks; and optical memory devices, for example, digital versatile/video disc (DVD), compact disc (CD) ROM, DVD+/-R, DVD-RAM, DVD-ROM, high-definition/density (HD)-DVD, and BLU-RAY/BLU-RAY DISC (BD), and other optical memory technologies. The memory can store various objects or data, including caches, classes, frameworks, applications, modules, backup data, jobs, web pages, web page templates, data structures, database tables, repositories storing dynamic information, or other appropriate information including any parameters, variables, algorithms, instructions, rules, constraints, or references. Additionally, the memory can include other appropriate data, such as logs, policies, security or access data, or reporting files. The processor and the memory can be supplemented by, or incorporated in, special-purpose logic circuitry.

To provide for interaction with a user, implementations of the subject matter described in this specification can be implemented on a computer having a display device, for example, a cathode ray tube (CRT), liquid crystal display (LCD), light emitting diode (LED), or plasma monitor, for displaying information to the user and a keyboard and a pointing device, for example, a mouse, trackball, or trackpad by which the user can provide input to the computer. Input can also be provided to the computer using a touchscreen, such as a tablet computer surface with pressure sensitivity or a multi-touch screen using capacitive or electric sensing. Other types of devices can be used to interact with the user. For example, feedback provided to the user can be any form of sensory feedback (such as, visual, auditory, tactile, or a combination of feedback types). Input from the user can be received in any form, including acoustic, speech, or tactile input. In addition, a computer can interact with the user by sending documents to and receiving documents from a client computing device that is used by the user (for example, by sending web pages to a web browser on a user's mobile computing device in response to requests received from the web browser).

The term "graphical user interface (GUI) can be used in the singular or the plural to describe one or more graphical user interfaces and each of the displays of a particular graphical user interface. Therefore, a GUI can represent any graphical user interface, including but not limited to, a web browser, a touch screen, or a command line interface (CLI) that processes information and efficiently presents the information results to the user. In general, a GUI can include a number of user interface (UI) elements, some or all associated with a web browser, such as interactive fields, pull-down lists, and buttons. These and other UI elements can be related to or represent the functions of the web browser.

Implementations of the subject matter described in this specification can be implemented in a computing system that includes a back end component, for example, as a data server, or that includes a middleware component, for example, an application server, or that includes a front-end component, for example, a client computer having a graphical user interface or a Web browser through which a user can interact with an implementation of the subject matter described in this specification, or any combination of one or more such back end, middleware, or front end components. The components of the system can be interconnected by any form or medium of wireline or wireless digital data communication (or a combination of data communication), for example, a communication network. Examples of communication networks include a local area network (LAN), a radio access network (RAN), a metropolitan area network (MAN), a wide area network (WAN), Worldwide Interoperability for Microwave Access (WIMAX), a wireless local area network (WLAN) using, for example, 802.11x or other protocols, all or a portion of the Internet, another communication network, or a combination of communication networks. The communication network can communicate with, for example, Internet Protocol (IP) packets, frame relay frames, Asynchronous Transfer Mode (ATM) cells, voice, video, data, or other information between network nodes.

The computing system can include clients and servers. A client and server are generally remote from each other and typically interact through a communication network. The relationship of client and server arises by virtue of computer programs running on the respective computers and having a client-server relationship to each other.

In some implementations, any or all of the components of the computing system, both hardware and/or software, may interface with each other and/or the interface using an API and/or a service layer. The API may include specifications for routines, data structures, and object classes. The API may be either computer language independent or dependent and refer to a complete interface, a single function, or even a set of APIs. The service layer provides software services to the computing system. The functionality of the various components of the computing system may be accessible for all service consumers via this service layer. Software services provide reusable, defined business functionalities through a defined interface. For example, the interface may be software written in JAVA, C++, or other suitable language providing data in XML format or other suitable formats. The API and/or service layer may be an integral and/or a stand-alone component in relation to other components of the computing system. Moreover, any or all parts of the service layer may be implemented as child or sub-modules of another software module, enterprise application, or hardware module without departing from the scope of this disclosure.

While this specification contains many specific implementation details, these should not be construed as limitations on the scope of any inventive concept or on the scope of what can be claimed, but rather as descriptions of features that can be specific to particular implementations of particular inventive concepts. Certain features that are described in this specification in the context of separate implementations can also be implemented, in combination, in a single implementation. Conversely, various features that are described in the context of a single implementation can also be implemented in multiple implementations, separately, or in any sub-combination. Moreover, although previously described features can be described as acting in certain combinations and even initially claimed as such, one or more features from a claimed combination can, in some cases, be excised from the combination, and the claimed combination can be directed to a sub-combination or variation of a sub-combination.

Particular implementations of the subject matter have been described. Other implementations, alterations, and permutations of the described implementations are within the scope of the following claims as will be apparent to those skilled in the art. While operations are depicted in the drawings or claims in a particular order, this should not be understood as requiring that such operations be performed in the particular order shown or in sequential order, or that all illustrated operations be performed (some operations can be considered optional), to achieve desirable results. In certain circumstances, multitasking or parallel processing (or a combination of multitasking and parallel processing) can be advantageous and performed as deemed appropriate.

The separation or integration of various system modules and components in the previously described implementations should not be understood as requiring such separation or integration in all implementations, and it should be understood that the described program components and systems can generally be integrated together in a single software product or packaged into multiple software products.

Accordingly, the previously described example implementations do not define or constrain the present disclosure. Other changes, substitutions, and alterations are also possible without departing from the scope of the present disclosure.

Furthermore, any claimed implementation is considered to be applicable to at least a computer-implemented method; a non-transitory, computer-readable medium storing computer-readable instructions to perform the computer-implemented method; and a computer system comprising a computer memory interoperably coupled with a hardware processor configured to perform the computer-implemented method or the instructions stored on the non-transitory, computer-readable medium.

The present disclosure also comprises the following enumerated example embodiments (EEEs), which are not claims.

EEE 1. A method, comprising:

processing a set of training samples through a plurality of first machine learning models to generate embedded vectors, wherein each of the plurality of first machine learning models generates an embedded vector for each training sample in the set of training samples;
training a second machine learning model by using the embedded vectors; and
training the plurality of first machine learning models by using the second machine learning model.

EEE 2. The method of EEE 1, further comprising: repeating the processing, the training of the second machine learning model, and the training of the plurality of first machine learning models in an iterative operation.

EEE 3. The method of EEE 1, wherein the second machine learning model is trained by using a loss function that predicts whether different embedded vectors are generated from a same training sample.

EEE 4. The method of EEE 1, wherein training the plurality of first machine learning models comprises training a plurality of first machine learning models with an aggregation function, wherein each of the plurality of first machine learning models generates a first output from an input sample and the aggregation function aggregates the first outputs from the plurality of first machine learning models to generate an aggregated output for the input sample.

EEE 5. The method of EEE 1, wherein the plurality of first machine learning models are trained based on a first parameter that evaluates an accuracy of the plurality of the first machine learning models and a second parameter that evaluates a differentiation result.

EEE 6. The method of EEE 5, wherein the first parameter is calculated based on a third parameter that evaluates a first accuracy of each of the plurality of first machine learning models and a second accuracy of an aggregated output of the plurality of first machine learning models.

EEE 7. The method of EEE 1, wherein each training sample represents an image, a software code, or a text.

EEE 8. The method of EEE 1, wherein each of the plurality of first machine learning models is configured to classify each training sample.

EEE 9. The method of EEE 1, wherein each of the plurality of first machine learning models is configured to generate a regression value based on each training sample.

EEE 10. A method, comprising:

receiving an input sample; and

processing the input sample by a plurality of first machine learning models to generate embedded vectors, wherein each of the plurality of first machine learning models generates a respective embedded vector, and wherein the plurality of first machine learning models are trained based on a first parameter that evaluates an accuracy of the plurality of the first machine learning models and a second parameter that evaluates a differentiation result.

EEE 11. The method of EEE 10, further comprising: generating a classification label for the input sample.

EEE 12. The method of EEE 10, further comprising: generating a regression value for the input sample.

EEE 13. A computer-implemented system, comprising:

one or more computers; and

one or more computer memory devices interoperably coupled with the one or more computers and having tangible, non-transitory, machine-readable media storing one or more instructions that, when executed by the one or more computers, perform one or more operations comprising:

processing a set of training samples through a plurality of first machine learning models to generate embedded vectors, wherein each of the plurality of first machine learning models generates an embedded vector for each training sample in the set of training samples;

training a second machine learning model by using the embedded vectors; and

training the plurality of first machine learning models by using the second machine learning model.

EEE 14. The computer-implemented system of EEE 13, the operations further comprising: repeating the processing, the training of the second machine learning model, and the training of the plurality of first machine learning models in an iterative operation.

EEE 15. The computer-implemented system of EEE 13, wherein the second machine learning model is trained by using a loss function that predicts whether different embedded vectors are generated from a same training sample.

EEE 16. The computer-implemented system of EEE 13, wherein training the plurality of first machine learning models comprises training a plurality of first machine learning models with an aggregation function, wherein each of the plurality of first machine learning models generates a first output from an input sample and the aggregation function aggregates the first outputs from the plurality of first machine learning models to generate an aggregated output for the input sample.

EEE 17. The computer-implemented system of EEE 13, wherein the plurality of first machine learning models are trained based on a first parameter that evaluates an accuracy of the plurality of the first machine learning models and a second parameter that evaluates a differentiation result.

EEE 18. The computer-implemented system of EEE 17, wherein the first parameter is calculated based on a third parameter that evaluates a first accuracy of each of the plurality of first machine learning models and a second accuracy of an aggregated output of the plurality of first machine learning models.

EEE 19. The computer-implemented system of EEE 13, wherein each training sample represents an image, a software code, or a text.

EEE 20. The computer-implemented system of EEE 13, wherein each of the plurality of first machine learning models is configured to classify each training sample.

**Claims**

1. A method, comprising:

processing a set of training samples through a plurality of first machine learning models to generate embedded vectors, wherein each of the plurality of first machine learning models generates an embedded vector for each training sample in the set of training samples;

training a second machine learning model by using the embedded vectors; and

training the plurality of first machine learning models by using the second machine learning model.

**2.** The method of claim 1, further comprising: repeating the processing, the training of the second machine learning model, and the training of the plurality of first machine learning models in an iterative operation.

**3.** The method of any previous claim, wherein the second machine learning model is trained by using a loss function that predicts whether different embedded vectors are generated from a same training sample.

**4.** The method of any previous claim, wherein training the plurality of first machine learning models comprises training a plurality of first machine learning models with an aggregation function, wherein each of the plurality of first machine learning models generates a first output from an input sample and the aggregation function aggregates the first outputs from the plurality of first machine learning models to generate an aggregated output for the input sample.

**5.** The method of any previous claim, wherein the plurality of first machine learning models are trained based on a first parameter that evaluates an accuracy of the plurality of the first machine learning models and a second parameter that evaluates a differentiation result.

**6.** The method of claim 5, wherein the first parameter is calculated based on a third parameter that evaluates a first accuracy of each of the plurality of first machine learning models and a second accuracy of an aggregated output of the plurality of first machine learning models.

**7.** The method of any previous claim, wherein each training sample represents an image, a software code, or a text.

**8.** The method of any previous claim, wherein each of the plurality of first machine learning models is configured to classify each training sample.

**9.** The method of any one of claims 1 to 7, wherein each of the plurality of first machine learning models is configured to generate a regression value based on each training sample.

**10.** A computer-implemented system, comprising:

one or more computers; and
one or more computer memory devices interoperably coupled with the one or more computers and
having tangible, non-transitory, machine-readable media storing one or more instructions that,
when executed by the one or more computers, perform one or more operations as recited in any of claims 1 to 9.

**11.** A computer-readable medium containing instructions which, when executed, cause an electronic device to perform operations as recited in any of claims 1 to 9.

*100*

Network
*110*

Client Device

*102*

First
Model
142a

First
Model
142b

First
Model
142c

Aggregation
Function
180

Analyzer function 104

Service Platform *106*

# FIG. 1

FIG. 2

*300*

processing a set of training samples through a plurality of first machine learning models to generate embedded vectors, wherein each of the plurality of first machine learning models generates an embedded vector for each training sample in the set of training samples

*310*

training a second machine learning model by using the embedded vectors

*320*

training the plurality of first machine learning models by using the second machine learning model

*330*

# FIG. 3

400

```
                                                            410
┌─────────────────────────────────────────────────────┐
│              receiving an input sample                │
└─────────────────────────────────────────────────────┘
                          │
                          ▼
┌─────────────────────────────────────────────────────┐
│   processing the input sample by a plurality of first │
│  machine learning models to generate embedded vectors,│
│   wherein each of the plurality of first machine      │
│   learning models generates a respective embedded     │
│   vector, and wherein the plurality of first machine  │  420
│   learning models are trained based on a first        │
│   parameter that evaluates an accuracy of the         │
│   plurality of the first machine learning models and  │
│   a second parameter that evaluates a differentiation │
│                       result                          │
└─────────────────────────────────────────────────────┘
                          │
                          ▼
                                                            430
┌─────────────────────────────────────────────────────┐
│       generating outputs based on the embedded vectors│
└─────────────────────────────────────────────────────┘
```

**FIG. 4**

*500*

Interface **502**

Processor
**504**

Application
**506**

API
**508**

Service Layer
**510**

*512*

Memory
**514**

# FIG. 5

Europäisches Patentamt

European Patent Office

Office européen des brevets

# EUROPEAN SEARCH REPORT

**Application Number**

EP 25 16 3534

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FERGUS IMRIE ET AL: "Composite Feature Selection using Deep Ensembles", ARXIV.ORG, CORNELL UNIVERSITY LIBRARY, 201 OLIN LIBRARY CORNELL UNIVERSITY ITHACA, NY 14853, 1 November 2022 (2022-11-01), XP091357752, * abstract; figure 1 * * Sections 3.2, 4 (complete), 5 * | 1-11 | INV. G06N3/045 G06N20/20 |
| A | US 11 526 693 B1 (GOLDENBERG ROMAN [IL] ET AL) 13 December 2022 (2022-12-13) * abstract; figures 1, 4 * * column 1, lines 6-17 * * column 1, line 65 - column 3, line 58 * * column 7, lines 1-37 * | 1-11 | |
| A | DONGWON KIM ET AL: "Improving Cross-Modal Retrieval with Set of Diverse Embeddings", ARXIV.ORG, CORNELL UNIVERSITY LIBRARY, 201 OLIN LIBRARY CORNELL UNIVERSITY ITHACA, NY 14853, 30 November 2022 (2022-11-30), XP091382203, * abstract; figure 2 * * Section 3 (complete) * | 1-11 | |

**TECHNICAL FIELDS SEARCHED (IPC)**

G06N

The present search report has been drawn up for all claims

| Place of search | Date of completion of the search | Examiner |
|---|---|---|
| The Hague | 7 July 2025 | Houtgast, Ernst |

EPO FORM 1503 03.82 (P04C01)

## EP 4 617 951 A1

### ANNEX TO THE EUROPEAN SEARCH REPORT
### ON EUROPEAN PATENT APPLICATION NO.

EP 25 16 3534

This annex lists the patent family members relating to the patent documents cited in  the above-mentioned European search report.
The members are as contained in the European Patent Office EDP file on
The European Patent Office is in no way liable for these particulars which are merely given for the purpose of information.

07-07-2025

| Patent document cited in search report | Publication date | Patent family member(s) | Publication date |
|---|---|---|---|
| US 11526693 B1 | 13-12-2022 | NONE | |